# EUROPÄISCHE PATENTANMELDUNG

(11) **EP 2 384 642 A2**
(43) Veröffentlichungstag der Anmeldung: **09.11.2011**
(21) Anmeldenummer: 11003100.2
(22) Anmeldetag: 13.04.2011
(51) Int. Cl.: A22C 17/00

(54) **Vorrichtung zum Bearbeiten von Lebensmitteln**

(30) Priorität: 03.05.2010 DE 102010019325
(71) Anmelder: Rühle GmbH, 79865 Grafenhausen (DE)
(72) Erfinder: Rühle, Claus, 79859 Schluchsee (DE)
(74) Vertreter: Huwer, Andreas

(57) **Zusammenfassung**

Eine Vorrichtung (1) zum Bearbeiten von Lebensmitteln, wie Fleisch oder Wurst, insbesondere zum Schneiden des Lebensmittels in Scheiben, Würfel oder Streifen, hat einen Aufnahmeschacht (2) für das Lebensmittel, der eine Einfüllöffnung (3) und eine Auslassöffnung aufweist. Mittels einer Vorschubeinrichtung ist das in dem Aufnahmeschacht (2) befindliche Lebensmittel zu einem ein an der Auslassöffnung angeordneten Bearbeitungswerkzeug (10) transportierbar. An der Einfüllöffnung (3) ist ein Schachtverschlussschieber (4) angeordnet, der in der von der Einfüllöffnung (3) aufgespannten Fläche aus einer Offenstellung in eine Schließrichtung (5) in eine Schließstellung verstellbar ist. Der Schachtverschlussschieber (4) weist an seinem in der Offenstellung der Einfüllöffnung (3) zugewandten vorderen Randbereich ein Trennmesser (7) zum Durchtrennen von aus der Einfüllöffnung (3) überstehendem Lebensmittel auf Das Trennmesser (7) ist in einer in der von der Einfüllöffnung (3) aufgespannten Fläche quer zur Schließrichtung (5) verlaufenden Schneidbewegungsrichtung (9) relativ zu dem Aufnahmeschacht (2) bewegbar gelagert und mittels einer Antriebseinrichtung in Schneidbewegungsrichtung (9) antreibbar.

## Beschreibung

Die Erfindung betrifft eine Vorrichtung zum Bearbeiten von Lebensmitteln, wie Fleisch oder Wurst, insbesondere zum Schneiden des Lebensmittels in Scheiben, Würfel oder Streifen, mit einem eine Einfüllöffnung und eine Auslassöffnung aufweisenden Aufnahmeschacht für das Lebensmittel, mit einer Vorschubeinrichtung, mittels der das in dem Aufnahmeschacht befindliche Lebensmittel zu einem ein an der Auslassöffnung angeordneten Bearbeitungswerkzeug transportierbar ist, mit einem Schachtverschlussschieber, der in der von der Einfüllöffnung aufgespannten Fläche aus einer Offenstellung in eine Schließrichtung in eine Schließstellung verstellbar ist, und wobei der Schachtverschlussschieber an seinem in der Offenstellung der Einfüllöffnung zugewandten vorderen Randbereich ein Trennmesser zum Durchtrennen von aus der Einfüllöffnung überstehendem Lebensmittel aufweist.

Ein derartige Vorrichtung, die als Streifen- oder Würfelschneider ausgebildet ist, ist aus DE 196 12 382 C2 bekannt. Sie weist einen kastenförmigen Aufnahmeschacht für das Lebensmittel auf, der an seiner Oberseite eine Einfüllöffnung hat, die unterhalb eines Einfülltrichters angeordnet ist. Die Einfüllöffnung ist mit einem Schachtverschlussschieber verschließbar, der in Schließstellung die obere Wand des Aufnahmeschachts bildet. Zum Schneiden des Lebensmittels in Streifen oder Würfel wird zunächst der Schachtverschlussschieber geöffnet und dann wird über den Einfülltrichter das Schneidgut, wie Fleisch, Wurst Käse oder dergleichen in den offenen Aufnahmeschacht eingefüllt. In der Regel passt das Schneidgut nicht genau in den Aufnahmeschacht und steht nach dem Befüllvorgang an der Einfüllöffnung über. Der Schachtverschlussschieber hat an seiner in der Offenstellung der Einfüllöffnung zugewandten Vorderseite ein Trennmesser, welches beim Schließen des Schachtverschlussschiebers das aus der Einfüllöffnung überstehende Lebensmittel durchtrennt. Nachdem der Schachtverschlussschieber geschlossen wurde, wird das in dem Aufnahmeschacht befindliche Lebensmittel mit Hilfe einer einen hydraulischen Vorschubstempel aufweisenden Vorschubeinrichtung durch ein an einer Auslassöffnung des Aufnahmeschacht angeordnetes Gattermesser hindurchgedrückt, um das Lebensmittel in Streifen oder Scheiben zu schneiden. Danach wird der Vorschubstempel in seine Ausgangslage zurück verschoben und der Schachtverschlussschieber wird geöffnet Bei Bedarf kann der Vorgang wiederholt werden, um weiteres Lebensmittel in Streifen oder Würfel zu schneiden.

Die Vorrichtung hat den Nachteil, dass beim Schließen des Schachtverschlussschiebers das Trennmesser einen Druck auf das Schneidgut ausübt, der zu Beginn der Schließbewegung noch gering ist und nicht ausreicht, um das Schneidgut zu schneiden. Durch den Druck wird das Schneidgut zunächst in dem Aufnahmeschacht in Schließrichtung des Schachtverschlussschiebers verschoben und dabei teilweise aus dem Aufnahmeschacht herausgequetscht. Dies führt dazu, dass der Aufnahmeschacht bei der anschließenden Vorschubbewegung des Vorschubstempels nicht vollständig ausgelastet ist.

Im weiteren Verlauf der Schließbewegung steigt der von dem Trennmesser auf das Schneidgut ausgeübte Druck an, bis dieser schließlich so groß ist, dass der Schneidvorgang einsetzt. Da das Lebensmittel durch das Trennmesser gequetscht wird, kommt es zu fransigen, ungleichmäßigen Schnittfläche, die als unschön empfunden wird. Ungünstig ist außerdem, dass der Antriebsmotor für den Schachtverschlussschieber eine relativ hohe Motorleistung aufweisen muss, um die nötige Schneidleistung zu erbringen.

Aus DE 93 08 956 U1 ist ferner eine gattungsfremdes Schneidgerät bekannt, das eine Förderstrecke aufweist, auf der Bleche herangeführt werden, auf denen ein Kuchen angeordnet ist. Oberhalb der Förderstrecke befindet sich ein Messerrahmen, an dem eine Vielzahl von Messersätzen parallel zueinander angeordnet sind. Jeder Messersatz weist eine Anzahl von Messerpaaren auf, deren Einzelmesser während des Schneidvorganges gegenläufig aneinander entlang gleiten. Dabei werden die Einzelmesser mit Hilfe von Excentern angetrieben. Das Schneidgerät weist jedoch keinen verschließbaren Aufnahmeschacht auf

Es besteht deshalb die Aufgabe, eine Vorrichtung der eingangs genannten Art zu schaffen, der bei dem der Schachtverschlussschieber mit einer geringen Antriebsleistung verstellt werden kann, und die dennoch eine hohe Produktivität und eine gute Schnittqualität ermöglicht.

Erfindungsgemäß wird diese Aufgabe dadurch gelöst, dass das Trennmesser in einer in der von der Einfüllöffnung aufgespannten Fläche quer zur Schließrichtung verlaufenden Schneidbewegungsrichtung relativ zu dem Aufnahmeschacht bewegbar gelagert und mittels einer Antriebseinrichtung in Schneidbewegungsrichtung antreibbar ist.

Vorteilhafte Weiterbildungen der Vorrichtung zum Bearbeiten von Lebensmitteln sind in den Unteransprüchen angegeben.

In vorteilhafter Weise braucht durch die quer zur Schließrichtung des Schachtverschlussschiebers orientierte Schneidbewegung beim Schließen des Schachtverschlussschiebers nur eine relativ kleine Vorschubkraft auf diesen ausgeübt zu werden, so dass ein Herausquetschen des Lebensmittels aus dem Aufnahmeschacht weitestgehend vermieden wird. Die Vorrichtung ermöglicht dadurch eine hohe Produktivität. Außerdem kann das Lebensmittel mit Hilfe des beweglichen Trennmessers mit einer glatten, fransenfreien Schnittfläche durchtrennt werden.

Bei einer bevorzugten Ausgestaltung der Erfindung weist die Antriebseinrichtung eine ortsfest zum Aufnahmeschacht angeordnete Führung auf, an der das Trennmesser entlang einer Führungsbahn verschiebbar angeordnet ist, wobei die Führungsbahn zumindest abschnittweise derart schräg zur Schließrichtung verläuft, dass das Trennmesser beim Verstellen des Schachtverschlussschiebers aus der Offen- in die Schließstellung in Schneidbewegungsrichtung bewegt wird. In vorteilhafter Weise wird das Trennmesser dadurch beim Schließen des Schachtverschlussschiebers zwangsweise in Schneidbewegungsrichtung bewegt, so dass zum Verstellen des Schachtverschlussschiebers zwischen der Offen- und der Schließstellung und zum gleichzeitigen Durchführen der quer zur Schließrichtung des Schachtverschlussschiebers orientierten Schneidbewegung des Trennmessers nur ein einziger Antrieb vorgesehen sein kann. Der Antrieb kann insbesondere ein Elektromotor sein. Selbstverständlich ist es aber auch möglich, den Schachtverschlussschieber hydraulisch, pneumatisch oder manuell zu betätigen.

Vorteilhaft ist, wenn der Verlauf der Führungsbahn derart gewählt ist, dass das Trennmesser beim Verstellen des Schachtverschlussschiebers aus der Offen- in die Schließstellung abwechselnd in zueinander entgegen gesetzte Schneidbewegungsrichtungen verstellt wird. Das Schneidgut kann dann noch leichter und präziser mit dem Trennmesser durchtrennt werden. Die Führungsbahn, entlang der das Trennmesser verschiebbar ist, weist bevorzugt einen zickzackförmigen Verlauf auf

Bei einer vorteilhaften Ausbildungsform der Erfindung ist am Trennmesser eine Führungsfläche angeordnet, die in der senkrechten Projektion auf die von der Einfüllöffnung aufgespannte Fläche schräg zur Schließrichtung verläuft und ausgehend von ihrem zu einer am vorderen Rand des Trennmessers befindlichen Messerschneide benachbarten vorderen Ende zu ihrem von der Messerschneide entfernten hinteren Ende von dem Aufnahmeschacht weg verläuft, wobei die ortsfest zum Aufnahmeschacht angeordnete Führung mindestens einen Führungsvorsprung aufweist, der derart angeordnet ist, dass er beim Verschieben des Schachtverschlussschiebers aus der Offen- in die Schließstellung mit einer von dem hinteren Ende der Führungsfläche beabstandeten Stelle der Führungsfläche in Berührung gerät und das Trennmesser in Schneidbewegungsrichtung verschiebt. Die Antriebseinrichtung ermöglicht dadurch einen einfachen und kostengünstigen Aufbau. An dem Führungsvorsprung kann ggf. ein Rolle angeordnet sein, um die Reibung zwischen dem Führungsvorsprung und der Führungsfläche zu reduzieren.

Zweckmäßigerweise ist an dem Trennmesser zusätzlich zu der ersten Führungsfläche eine zweite Führungsfläche angeordnet, die in der senkrechten Projektion auf die von der Einfüllöffnung aufgespannte Fläche derart schräg zur Schließrichtung verläuft, dass der Abstand, den die zweite Führungsfläche zur ersten Führungsfläche in Schneidbewegungsrichtung aufweist, ausgehend vom vorderen Ende zum hinteren Ende der ersten Führungsfläche zunimmt, wobei die Führung zusätzlich zu dem mit der ersten Führungsfläche zusammenwirkenden ersten Führungsvorsprung mindestens einen zweiten Führungsvorsprung aufweist, der in Schließrichtung zu dem ersten Führungsvorsprung beabstandet und derart angeordnet ist, dass er beim Verschieben des Schachtverschlussschiebers aus der Offen- in die Schließstellung mit einer von dem hinteren Ende der zweiten Führungsfläche beabstandeten Stelle dieser Führungsfläche in Berührung gerät und das Trennmesser in die entgegen gesetzte Richtung verschiebt wie der erste Führungsvorsprung. Das Lebensmittel kann dann mit dem Trennmesser noch leichter durchtrennt werden.

Bei Bedarf kann das Trennmesser eine dritte Führungsfläche aufweisen, die in der senkrechten Projektion auf die von der Einfüllöffnung aufgespannte Fläche schräg zur Schließrichtung verläuft und ausgehend von ihrem zu der Messerschneide benachbarten vorderen Ende zu ihrem von der Messerschneide entfernten hinteren Ende auf den Aufnahmeschacht zu verläuft, wobei die dritte Führungsfläche in Schließrichtung einen größeren Abstand zur Messerschneide aufweist als die erste Führungsfläche, wobei der erste Führungsvorsprung der dritten Führungsfläche zugewandt ist, wenn die zweite Führungsfläche am zweiten Führungsvorsprung zur Anlage kommt. Das Trennmesser ist dann sowohl in Schneidbewegungsrichtung als auch in die zur Schneidbewegungsrichtung entgegen gesetzte Richtung an der Führung geführt.

Das Trennmesser kann außerdem eine vierte Führungsfläche aufweisen, die in der senkrechten Projektion auf die von der Einfüllöffnung aufgespannte Fläche schräg zur Schließrichtung verläuft und ausgehend von ihrem zu der Messerschneide benachbarten vorderen Ende zu ihrem von der Messerschneide entfernten hinteren Ende auf den Aufnahmeschacht zu verläuft, wobei die vierte Führungsfläche in Schließrichtung einen größeren Abstand zur Messerschneide aufweist als die zweite Führungsfläche, wobei der zweite Führungsvorsprung der vierten Führungsfläche zugewandt ist, wenn die erste Führungsfläche an einem dritten Führungsvorsprung der Führung zur Anlage kommt, der in Schließrichtung von dem ersten Führungsvorsprung beabstandet ist. Das Messer ist dann noch präziser an der Führung zwangsgeführt.

Bei einer bevorzugten Ausgestaltung der Erfindung weist der Schachtverschlussschieber eine in Richtung der Schließbewegung verschiebbar mit dem Aufnahmeschacht verbundene Verschlussplatte auf, wobei das Trennmesser über eine Schiebeführung in Schneidbewegungsrichtung verschiebbar an der Verschlussplatte angeordnet ist. Das Trennmesser und die Verschlussplatte können dann aus unterschiedlichen Werkstoffen hergestellt sein. Bei Bedarf kann das Trennmesser von der Verschlussplatte demontiert und durch ein entsprechendes Ersatzteil ersetzt werden. Es ist aber auch denkbar, dass das Trennmesser einstückig mit der Verschlussplatte ausgebildet ist.

Bei einer vorteilhaften Ausführungsform der Erfindung hat die Schiebeführung mindestens zwei Führungsschlitze, die jeweils von einem Führungszapfen durchsetzt sind, wobei die Führungszapfen jeweils an einem aus dem ihnen zugeordneten Führungsschlitz herausragenden freien Endbereich eine den Rand des Führungsschlitzes hintergreifende, vorzugsweise pilzkopfförmige Querschnittserweiterung aufweisen, wobei jeder Führungsschlitz an mindestens einem Axialende mit einer Erweiterungsstelle verbunden ist, deren Querschnittabmessungen denen der Querschnittserweiterung entsprechen oder größer sind als diese, und wobei das Trennmesser relativ zu der Verschlussplatte in eine Montage- bzw. Demontageposition bringbar ist, in der die Querschnittserweiterungen jeweils in an der ihnen zugeordneten Erweiterungsstelle angeordnet sind. Das Trennmesser kann dann auf einfache Weise an dem Schachtverschlussschieber montiert und bei Bedarf gegen ein entsprechendes Ersatzteil ausgewechselt werden. Die Führungsschlitze sind bevorzugt in dem Trennmesser und die Führungszapfen an der Verschlussplatte angeordnet. Selbstverständlich ist aber auch eine umgekehrte Anordnung möglich.

Das Trennmesser ist vorzugsweise als Halbklinge ausgebildet, an der eine weitere Halbklinge anliegt, die fest mit der Verschlussplatte verbunden ist. Dabei kann die weitere Halbklinge einstückig mit der Verschlussplatte ausgebildet oder als separates Teil ausgestaltet sein, das ggf. mit Hilfe von Befestigungselementen an der Verschlussplatte fixiert ist. Gegebenenfalls ist es sogar möglich, dass die weitere Halbklinge ihrerseits quer zur Schließrichtung relativ zur Verschlussplatte bewegbar und derart antreibbar ist, dass sich die Halbklingen in zueinander entgegen gesetzte Richtungen relativ zur Verschlussplatte bewegen.

Bei einer bevorzugten Ausgestaltung der Erfindung weist der Schachtverschlussschieber mindestens eine in Richtung der Schließbewegung erstreckende Verzahnung auf, die bei in Schließstellung befindlichem Schachtverschlussschieber in der Aufsicht auf die von der Einfüllöffnung aufgespannten Fläche außerhalb dieser angeordnet ist und mit einem Antriebszahnrad der Antriebseinrichtung kämmt. Das Antriebszahnrad kann dabei von einem Servomotor angetrieben sein.

Nachfolgend ist ein Ausführungsbeispiel der Erfindung näher erläutert. Es zeigt:
- Fig. 1: eine Teilansicht einer Vorrichtung zum Bearbeiten von Lebensmitteln, die einen Aufnahmeschacht für das Lebensmittel aufweist, der eine mit einem Schachtverschlussschieber verschließbare Einfüllöffnung hat,
- Fig. 2: eine Darstellung ähnlich Fig. 1, wobei jedoch zwei Führungsschienenteile für ein an einer Verschlussplatte des Schachtverschlussschiebers verschiebbar angeordnetes Trennmesser entfernt sind,
- Fig. 3: eine Ausschnittvergrößerung zu Fig. 2, auf der Führungsvorsprünge der Führung erkennbar sind,
- Fig. 4: eine Aufsicht auf das Trennmesser.
- Fig. 5: eine Ansicht auf die Vorderseite des in Vormontagestellung befindlichen Schachtverschlussschiebers.
- Fig. 6: eine Ansicht auf die Vorderseite des Schachtverschlussschiebers, und
- Fig. 7: eine Ansicht auf die Rückseite des Schachtverschlussschiebers.

Eine als Streifen- oder Würfelschneider ausgestaltete Vorrichtung 1 zum Bearbeiten von Lebensmitteln, wie Fleisch, Wurst oder Käse weist einen Aufnahmeschacht 2 für das Lebensmittel auf, der eine Einfüllöffnung 3 hat. Die Einfüllöffnung 3 ist hinter dem Abgabe-Ende einer in der Zeichnung nicht näher dargestellten Fördereinrichtung angeordnet, die zwei Förderbänder aufweist, zwischen denen ein Förderspalt gebildet ist, der sich zur Einfüllöffnung 3 hin V-förmig verjüngt.

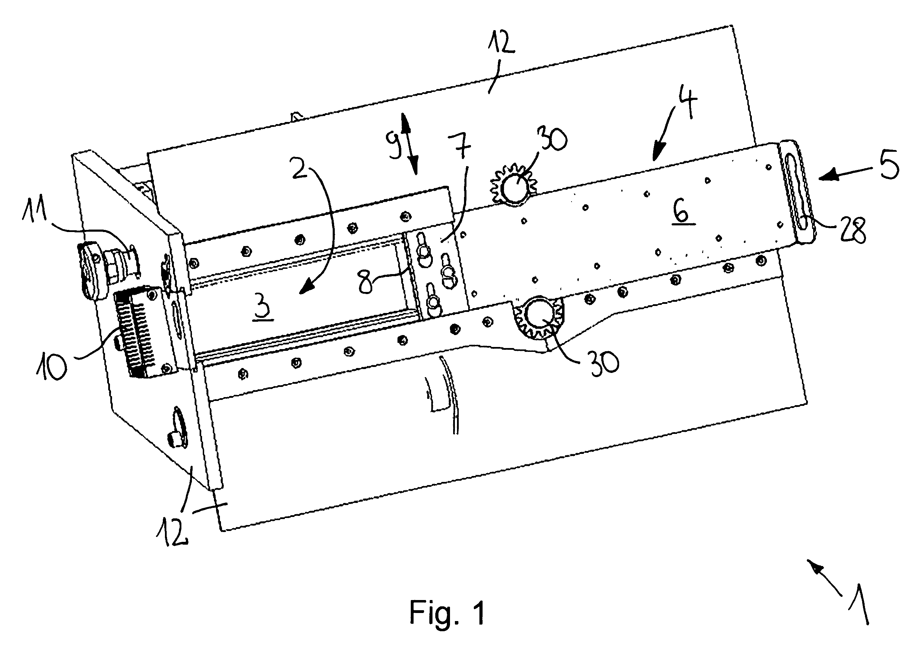

An der Einfüllöffnung 3 des Aufnahmeschachts 2 ist ein Schachtverschlussschieber 4 angeordnet, der in der von der Einfüllöffnung 3 aufgespannten Fläche oder Ebene aus einer in Fig. 1 gezeigten Offenstellung in die durch den Pfeil 5 markierte Schließrichtung in eine Schließstellung verschiebbar ist.

Der Schachtverschlussschieber 4 hat eine Verschlussplatte 6, an deren in der Offenstellung der Einfüllöffnung 3 zugewandtem vorderen Randbereich ein Trennmesser 7 zum Durchtrennen von aus der Einfüllöffnung 3 überstehendem Lebensmittel vorgesehen ist. In Fig. 1 ist erkennbar, dass das Trennmesser 7 in der von der Einfüllöffnung 3 aufgespannten Fläche angeordnet ist und mit der Längserstreckungsrichtung seiner Messerschneide 8 etwa rechtwinklig zur Schließrichtung 5 ausgerichtet. Die Messerschneide 8 steht in Verschlussrichtung 5 über den vorderen Randbereich der Verschlussplatte 6 über.

Das Trennmesser 7 ist mittels einer Schiebeführung in einer in Längserstreckungsrichtung der Messerschneide 8 verlaufenden, in Fig. 1 durch einen Doppelpfeil 9 markierten Schneidbewegungsrichtung relativ zu der Verschlussplatte 6 verschiebbar gelagert und mittels einer Antriebseinrichtung in Schneidbewegungsrichtung 9 antreibbar.

In Fig. 1 ist erkennbar, dass der Aufnahmeschacht eine Auslassöffnung für das Lebensmittel aufweist, die sich in einer Ebene erstreckt, die quer zu der von der Einfüllöffnung 3 aufgespannten Ebene angeordnet ist. An der Auslassöffnung befindet sich ein als Schneidgatter ausgestaltetes erstes Bearbeitungswerkzeug 10, das mehrere parallel zueinander verlaufende erste Schneidmesser und mehrere parallel zueinander verlaufende zweiten Schneidmesser hat, welche die ersten Schneidmesser kreuzen.

Außerdem weist die Vorrichtung eine in der Zeichnung nicht näher dargestellte Vorschubeinrichtung auf, die einen in dem Aufnahmeschacht in Schließrichtung 5 verschiebbaren Vorschubstempel hat, mittels dem das in dem Aufnahmeschacht 2 befindliche Lebensmittel zu dem Bearbeitungswerkzeug transportierbar und durch dessen Messergatter hindurchdrückbar ist. Anstelle des Vorschubstempels kann die Vorschubeinrichtung auch eine Förderschnecke aufweisen.

Erwähnt werden soll noch, dass hinter dem ersten Bearbeitungswerkzeug 10 ein in der Zeichnung nicht näher dargestelltes zweites Bearbeitungswerkzeug angeordnet ist, das als Abschneidemesser ausgestaltet ist. Das Abschneidemesser ist auf einer Welle 11 verschwenkbar angeordnet, die sich in Schließrichtung 5 erstreckt. Bei der Schwenkbewegung bewegt sich das Abschneidemesser in einer normal zur Schließrichtung 5 verlaufenden Ebene.

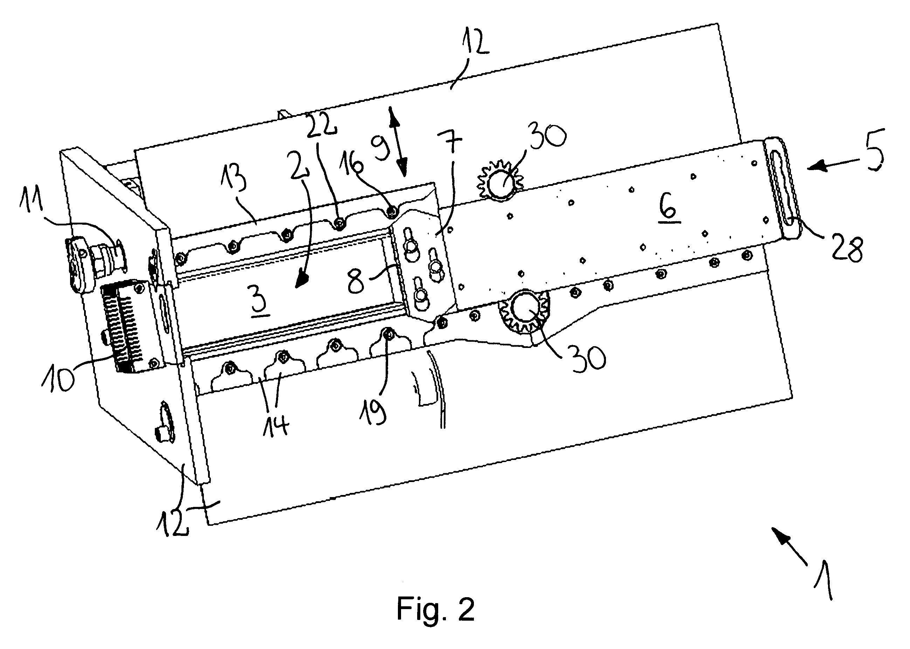

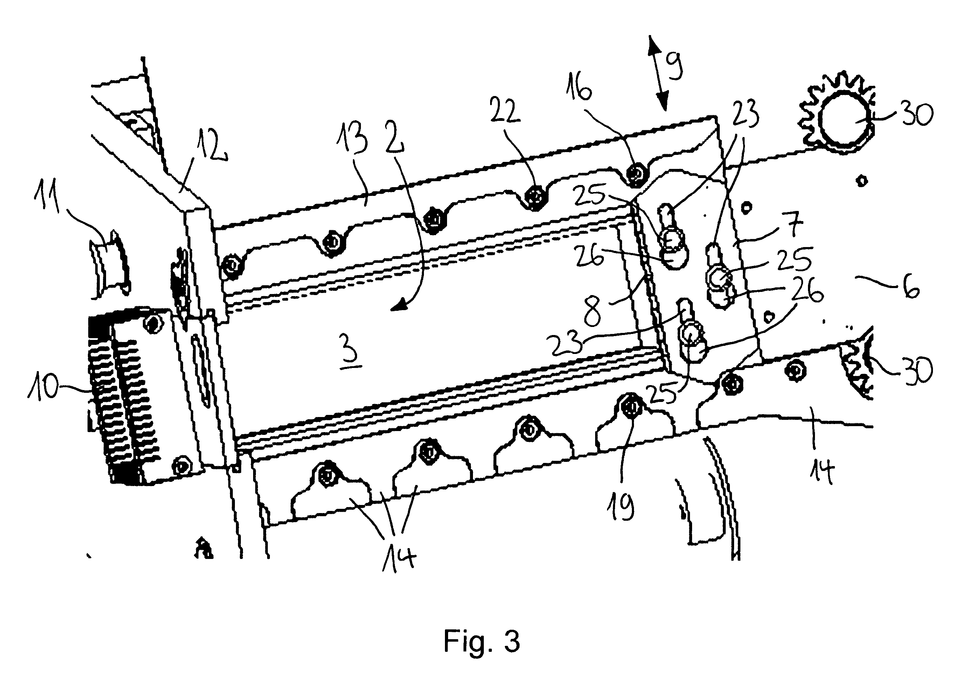

In Fig. 2 und 3 ist erkennbar, dass die Antriebseinrichtung eine ortsfest zum Aufnahmeschacht 2 angeordnete Führung aufweist, die an einem den Schacht begrenzenden Gehäuse 12 befestigt ist. Die Führung hat zwei etwa parallel zueinander angeordnete Führungsschienen 13, 14, die sich in Schließrichtung 5 erstrecken. Zwischen denen Führungsschienen 13, 14 ist die Einfüllöffnung 3 des Aufnahmeschachts angeordnet. Zwischen den Führungsschienen 13, 14 ist das Trennmesser 7 entlang einer von einer geraden Linie abweichenden Führungsbahn relativ zu dem Aufnahmeschacht 2 verschiebbar. Die Führungsbahn weist mehrere hintereinander angeordnete Abschnitte auf, die jeweils schräg zur Schließrichtung 5 verlaufen. Ausgehend von dem einen zum anderen Ende der Führungsbahn weisen die Abschnitte der Führungsbahn jeweils abwechseln eine zu der Einfüllöffnung 3 hin- und eine von der Einfüllöffnung 3 wegweisende Komponenten auf Dadurch bewegt sich das Trennmesser 7 beim Verschieben des Schachtverschlussschiebers aus der Offen- in die Schließstellung zickzackförmig in der von der Einfüllöffnung aufgespannten Fläche hin- und her.

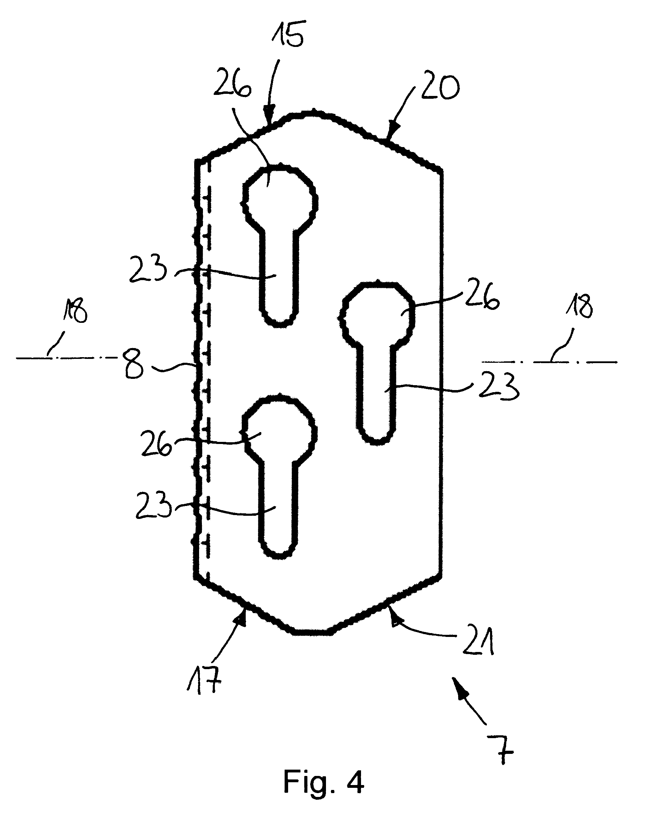

In Fig. 4 ist erkennbar, dass das Trennmesser 7 an einem ersten, in Schneidbewegungsrichtung 9 weisenden Endbereich eine erste Führungsfläche 15 aufweist, die in der der Zeichenebene in Fig. 4 entsprechenden senkrechten Projektion auf die von der Einfüllöffnung 3 aufgespannte Fläche unter einem Winkel von etwa 28° schräg zur Schließrichtung 5 verläuft. Ausgehend von dem zu der Messerschneide 8 benachbarten vorderen Ende der ersten Führungsfläche 15 zu dem von der Messerschneide 8 weiter entfernten hinteren Ende der ersten Führungsfläche 15 verläuft die erste Führungsfläche 15 von dem Aufnahmeschacht 2 weg.

An der Führungsschiene 13 weist die Führung einen ersten, in Richtung der Einfüllöffnung 3 vorstehenden Führungsvorsprung 16 auf, der derart angeordnet ist, dass er beim Verschieben des Schachtverschlussschiebers 4 aus der Offen- in die Schließstellung an einer von dem hinteren Ende der ersten Führungsfläche 15 beabstandeten Stelle an der ersten Führungsfläche 15 zur Anlage kommt. Dabei wird das Trennmesser 7 zu der anderen Führungsschiene 14 hin relativ zu der Verschlussplatte 6 verschoben.

An einem von der ersten Führungsfläche 15 beabstandeten, der Führungsschiene 14 zugewandten Endbereich weist das Trennmesser 7 eine zweite Führungsfläche 17 auf, die bezüglich einer in Schließrichtung 5 verlaufenden Symmetrielinie 18 spiegelsymmetrisch zur ersten Führungsfläche 15 verläuft. An der Führungsschiene 14 ist ein zweiter Führungsvorsprung 19 angeordnet, der in Schließrichtung 5 zu dem ersten Führungsvorsprung 16 beabstandet ist. Der zweite Führungsvorsprung 19 ist derart angeordnet, dass er beim Verschieben des Schachtverschlussschiebers 4 aus der Offen- in die Schließstellung mit einer von dem hinteren Ende der zweiten Führungsfläche 17 beabstandeten Stelle dieser Führungsfläche 17 in Berührung gerät und das Trennmesser auf die Führungsschiene 13 zu bewegt.

Außerdem hat das Trennmesser 7 eine dritte Führungsfläche 20, die etwa parallel zu der zweiten Führungsfläche 17 verläuft und in Schließrichtung 5 einen größeren Abstand zur Messerschneide 8 aufweist als die erste Führungsfläche 15. Der erste Führungsvorsprung 16 ist der dritten Führungsfläche 20 zugewandt, wenn die zweite Führungsfläche 17 am zweiten Führungsvorsprung 19 zur Anlage kommt.

Das Trennmesser 7 hat ferner eine vierte Führungsfläche 21, die etwa parallel zu der zweiten Führungsfläche 15 verläuft und in Schließrichtung 5 einen größeren Abstand zur Messerschneide 8 aufweist als die zweite Führungsfläche 17. Der zweite Führungsvorsprung 19 ist der vierten Führungsfläche 21 zugewandt, wenn die erste Führungsfläche 15 an einem dritten Führungsvorsprung 22 zur Anlage kommt, der an der Führungsschiene 13 angeordnet und in Schließrichtung 5 von dem ersten Führungsvorsprung 16 beabstandet ist. In Fig. 3 ist noch erkennbar, dass die an der einen Führungsschiene 13 angeordneten Führungsvorsprünge 16, 22 mit den Führungsvorsprüngen 19 der anderen Führungsschiene 14 auf Lücke versetzt sind.

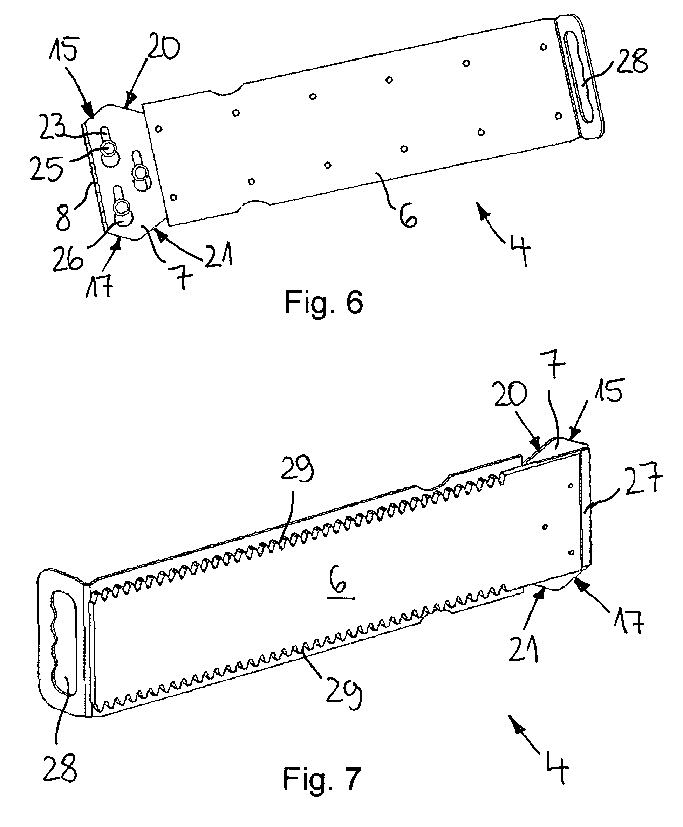

In Fig. 4 bis 6 ist erkennbar, dass die Schiebeführung in dem Trennmesser 7 mehrere parallel zueinander verlaufende Führungsschlitze 23 vorgesehen sind, die jeweils von einem an der Verschlussplatte 6 angeordneten Führungszapfen 25 durchsetzt sind. Die Führungszapfen 25 ragen jeweils mit ihrem von der Verschlussplatte 6 beabstandeten freien Ende dem ihnen zugeordneten Führungsschlitz 23 heraus und weisen dort eine pilzkopfförmige Querschnittserweiterung auf, welche den Rand des betreffenden Führungsschlitzes 23 hintergreift. Das von der Führungsschiene 13 entfernte Ende jedes Führungsschlitzes 23 ist mit einer Erweiterungsstelle 26 verbunden, deren Querschnittabmessungen etwas größer sind als die der Querschnittserweiterung des Führungszapfens 25.

Der Schachtverschlussschieber 4 kann aus der Offenstellung entgegen der Schließrichtung 5 über das hintere Ende der Führungsschiene **13** hinaus in eine Servicestellung verschoben werden, in der die Führungszapfen 25 an den Erweiterungsstellen 26 positionierbar sind, um das Trennmesser 7 in Axialrichtung der Führungszapfen 25 von der Verschlussplatte 6 zu demontieren. Das Trennmesser 7 kann dann bei Bedarf gegen ein entsprechendes Ersatzteil ausgetauscht werden.

Wenn sich der Schachtverschlussschieber 4 in der Offenstellung, der Schließstellung oder zwischen diesen befindet, ist das Trennmesser 7 zwischen beidseits der Einfüllöffnung 3 angeordneten, sich in Richtung der Schließbewegung 5 erstreckenden, einander zugewandten Führungsnuten der Führungsschienen 1 3, 14 angeordnet. In diese Führungsnuten greifen das Trennmesser 7 und die Verschlussplatte 6 mit einander abgewandten Randbereichen ein. Das Trennmesser 7 wird dabei durch die Führungsschiene 13 daran gehindert, mit den Erweiterungsstellen 26 an den Führungszapfen 25 positioniert zu werden.

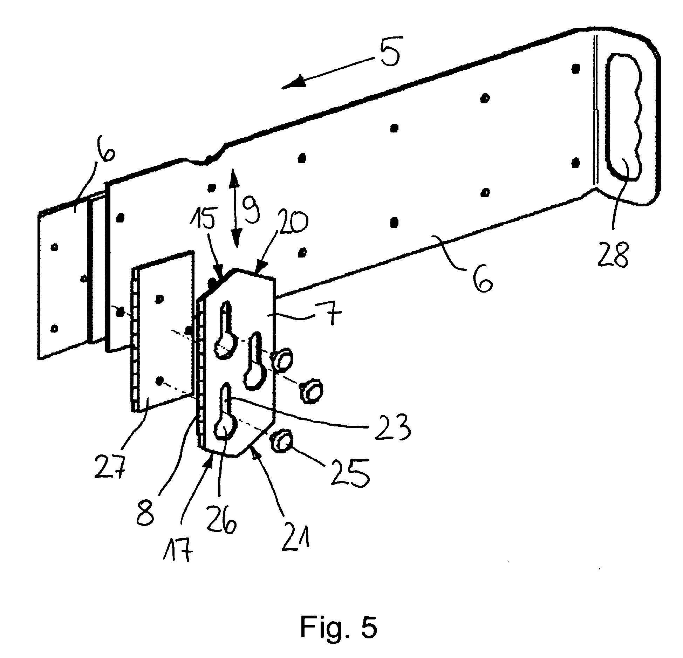

In Fig. 5 ist noch erkennbar, dass das Trennmesser 7 als Halbklinge ausgebildet ist, an der eine weitere Halbklinge 27 flächig anliegt, die über die Führungszapfen 25 fest mit der Verschlussplatte 6 verbunden ist.

An ihrem von dem Trennmesser 7 entfernten hinteren Endbereich hat die Verschlussplatte 6 einen Handgriff 28. Der Handgriff 28 ist durch eine Öffnung gebildet, die in einem gegenüber der von der Einfüllöffnung 3 aufgespannte Fläche abgewinkelten Abschnitt der Verschlussplatte 6 angeordnet ist.

Die Verschlussplatte 6 hat an ihrer Rückseite zwei sich in Richtung der Schließbewegung 5 erstreckende Verzahnungen 29, die bei in Schließstellung befindlichem Schachtverschlussschieber 4 in der Aufsicht auf die von der Einfüllöffnung 3 aufgespannten Fläche außerhalb dieser angeordnet sind. Die Verzahnungen 29 kämmen jeweils mit einem Antriebszahnrad 30, das mit einem Antriebsmotor in Antriebsverbindung steht. Mit Hilfe des Antriebsmotors kann der Schachtverschlussschieber 4 in bzw. entgegen der Verschlussrichtung 5 relativ zu dem Gehäuse 12 verschoben und das Trennmesser in Schneidbewegungsrichtung 9 hin- und herbewegt werden.

## Patentansprüche

1. Vorrichtung (1) zum Bearbeiten von Lebensmitteln, wie Fleisch oder Wurst, insbesondere zum Schneiden des Lebensmittels in Scheiben, Würfel oder Streifen, mit einem eine Einfüllöffnung (3) und eine Auslassöffnung aufweisenden Aufnahmeschacht (2) für das Lebensmittel, mit einer Vorschubeinrichtung, mittels der das in dem Aufnahmeschacht (2) befindliche Lebensmittel zu einem ein an der Auslassöffnung angeordneten Bearbeitungswerkzeug (10) transportierbar ist, mit einem Schachtverschlussschieber (4), der in der von der Einfüllöffnung (3) aufgespannten Fläche aus einer Offenstellung in eine Schließrichtung (5) in eine Schließstellung verstellbar ist, und wobei der Schachtverschlussschieber (4) an seinem in der Offenstellung der Einfüllöffnung (3) zugewandten vorderen Randbereich ein Trennmesser (7) zum Durchtrennen von aus der Einfüllöffnung (3) überstehendem Lebensmittel aufweist, **dadurch gekennzeichnet dass** das Trennmesser (7) in einer in der von der Einfüllöffnung (3) aufgespannten Fläche quer zur Schließrichtung (5) verlaufenden Schneidbewegungsrichtung (9) relativ zu dem Aufnahmeschacht (2) bewegbar gelagert und mittels einer Antriebseinrichtung in Schneidbewegungsrichtung (9) antreibbar ist.

2. Vorrichtung (1) nach Anspruch 1, **dadurch gekennzeichnet, dass** die Antriebseinrichtung eine ortsfest zum Aufnahmeschacht (2) angeordnete Führung aufweist, an der das Trennmesser (7) entlang einer Führungsbahn verschiebbar angeordnet ist, und dass die Führungsbahn zumindest abschnittweise derart schräg zur Schließrichtung (5) verläuft, dass das Trennmesser (7) beim Verstellen des Schachtverschlussschiebers (4) aus der Offen- in die Schließstellung in Schneidbewegungsrichtung (9) bewegt wird.

3. Vorrichtung (1) nach Anspruch 2, **dadurch gekennzeichnet, dass** der Verlauf der Führungsbahn derart gewählt ist, dass das Trennmesser (7) beim Verstellen des Schachtverschlussschiebers (4) aus der Offen- in die Schließstellung abwechselnd in zueinander entgegen gesetzte Schneidbewegungsrichtungen (9) verstellt wird.

4. Vorrichtung (1) nach einem der Ansprüche 1 bis 3, **dadurch gekennzeichnet dass** am Trennmesser (7) eine Führungsfläche (15) angeordnet ist, die in der senkrechten Projektion auf die von der Einfüllöffnung (3) aufgespannte Fläche schräg zur Schließrichtung (5) verläuft und ausgehend von ihrem zu einer am vorderen Rand des Trennmessers (7) befindlichen Messerschneide (8) benachbarten vorderen Ende zu ihrem von der Messerschneide (8) entfernten hinteren Ende von dem Aufnahmeschacht (2) weg verläuft, und dass die ortsfest zum Aufnahmeschacht (2) angeordnete Führung mindestens einen Führungsvorsprung (16) aufweist, der derart angeordnet ist, dass er beim Verschieben des Schachtverschlussschiebers (4) aus der Offen- in die Schließstellung mit einer von dem hinteren Ende der Führungsfläche (15) beabstandeten Stelle der Führungsfläche (15) in Berührung gerät und das Trennmesser (7) in Schneidbewegungsrichtung (9) verschiebt.

5. Vorrichtung (1) nach Anspruch 4, **dadurch gekennzeichnet, dass** an dem Trennmesser (7) zusätzlich zu der ersten Führungsfläche (15) eine zweite Führungsfläche (17) angeordnet ist, die in der senkrechten Projektion auf die von der Einfüllöffnung (3) aufgespannte Fläche derart schräg zur Schließrichtung (5) verläuft, dass der Abstand, den die zweite Führungsfläche (17) zur ersten Führungsfläche (15) in Schneidbewegungsrichtung (9) aufweist, ausgehend vom vorderen Ende zum hinteren Ende der ersten Führungsfläche (15) zunimmt, und dass die Führung zusätzlich zu dem mit der ersten Führungsfläche (15) zusammenwirkenden ersten Führungsvorsprung (16) mindestens einen zweiten Führungsvorsprung (19) aufweist, der in Schließrichtung zu dem ersten Führungsvorsprung (16) beabstandet und derart angeordnet ist, dass er beim Verschieben des Schachtverschlussschiebers (4) aus der Offen- in die Schließstellung mit einer von dem hinteren Ende der zweiten Führungsfläche (17) beabstandeten Stelle dieser Führungsfläche (17) in Berührung gerät und das Trennmesser (7) in die entgegen gesetzte Richtung verschiebt wie der erste Führungsvorsprung (15).

6. Vorrichtung (1) nach Anspruch 5, **dadurch gekennzeichnet, dass** das Trennmesser (7) eine dritte Führungsfläche (20) aufweist, die in der senkrechten Projektion auf die von der Einfüllöffnung (3) aufgespannte Fläche schräg zur Schließrichtung (5) verläuft und ausgehend von ihrem zu der Messerschneide (8) benachbarten vorderen Ende zu ihrem von der Messerschneide (8) entfernten hinteren Ende auf den Aufnahmeschacht (2) zu verläuft, dass die dritte Führungsfläche (20) in Schließrichtung (5) einen größeren Abstand zur Messerschneide (8) aufweist als die erste Führungsfläche (15), und dass der erste Führungsvorsprung (16) der dritten Führungsfläche (20) zugewandt ist, wenn die zweite Führungsfläche (17) am zweiten Führungsvorsprung (19) zur Anlage kommt.

7. Vorrichtung (1) nach Anspruch 6, **dadurch gekennzeichnet, dass** das Trennmesser (7) eine vierte Führungsfläche (21) aufweist, die in der senkrechten Projektion auf die von der Einfüllöffnung (3) aufgespannte Fläche schräg zur Schließrichtung (5) verläuft und ausgehend von ihrem zu der Messerschneide (8) benachbarten vorderen Ende zu ihrem von der Messerschneide (8) entfernten hinteren Ende auf den Aufnahmeschacht (2) zu verläuft, dass die vierte Führungsfläche (21) in Schließrichtung (5) einen größeren Abstand zur Messerschneide (8) aufweist als die zweite Führungsfläche (17), und dass der zweite Führungsvorsprung (19) der vierten Führungsfläche (21) zugewandt ist, wenn die erste Führungsfläche (15) an einem dritten Führungsvorsprung (22) der Führung zur Anlage kommt, der in Schließrichtung (5) von dem ersten Führungsvorsprung (16) beabstandet ist.

8. Vorrichtung (1) nach einem der Ansprüche 1 bis 7, **dadurch gekennzeichnet, dass** der Schachtverschlussschieber (4) eine in Richtung der Schließbewegung (5) verschiebbar mit dem Aufnahmeschacht verbundene Verschlussplatte (6) aufweist, und dass das Trennmesser (7) über eine Schiebeführung in Schneidbewegungsrichtung (9) verschiebbar an der Verschlussplatte (6) angeordnet ist.

9. Vorrichtung (1) nach einem der Ansprüche 1 bis 8, **dadurch gekennzeichnet, dass** die Schiebeführung mindestens zwei Führungsschlitze (23) hat, die jeweils von einem Führungszapfen (25) durchsetzt sind, dass die Führungszapfen (25) jeweils an einem aus dem ihnen zugeordneten Führungsschlitz herausragenden freien Endbereich eine den Rand des Führungsschlitzes (23) hintergreifende, vorzugsweise pilzkopfförmige Querschnittserweiterung aufweisen, dass jeder Führungsschlitz (23) an mindestens einem Axialende mit einer Erweiterungsstelle (26) verbunden ist, deren Querschnittabmessungen denen der Querschnittserweiterung entsprechen oder größer sind als diese, und dass das Trennmesser (7) relativ zu der Verschlussplatte (6) in eine Montage- bzw. Demontageposition bringbar ist, in der die Querschnittserweiterungen jeweils in an der ihnen zugeordneten Erweiterungsstelle (26) angeordnet sind.

10. Vorrichtung (1 ) nach einem der Ansprüche 1 bis 9, **dadurch gekennzeichnet, dass** das Trennmesser (7) als Halbklinge ausgebildet ist, an der eine weitere Halbklinge (27) anliegt, die fest mit der Verschlussplatte (6) verbunden ist.

11. Vorrichtung (1) nach einem der Ansprüche 1 bis 10, **dadurch gekennzeichnet, dass** beidseits der Einfüllöffnung (3) sich in Richtung der Schließbewegung (5) erstreckende, einander zugewandte Führungsnuten angeordnet sind, in welche das Trennmesser (7) mit einander abgewandten Endbereichen eingreift.

12. Vorrichtung (1) nach einem der Ansprüche 1 bis 11, **dadurch gekennzeichnet, dass** der Schachtverschlussschieber (4) mindestens eine in Richtung der Schließbewegung (5) erstreckende Verzahnung (29) aufweist, die bei in Schließstellung befindlichem Schachtverschlussschieber (4) in der Aufsicht auf die von der Einfüllöffnung (3) aufgespannten Fläche außerhalb dieser angeordnet ist und mit einem Antriebszahnrad (30) der Antriebseinrichtung kämmt.
